# EUROPÄISCHE PATENTANMELDUNG

(11) **EP 1 839 919 A1**
(43) Veröffentlichungstag der Anmeldung: **03.10.2007**
(21) Anmeldenummer: 07004654.5
(22) Anmeldetag: 07.03.2007
(51) Int. Cl.: B60G 11/14, C21D 7/08, F16F 1/04

(54) **Schraubendruckfeder**

(30) Priorität: 30.03.2006 DE 102006015216
(71) Anmelder: Muhr und Bender KG, 57439 Attendorn (DE)
(72) Erfinder: Kriese, Hans Ulrich Dipl.-Ing., 99631 Weißensee (DE); Ditzer, Boris Dipl.-Wirt.-Ing,, 57399 Kirchhundem (DE); Asbeck, Jochen Dr.-Ing, 57439 Attendorn (DE); Neubrand, Jörg Dr.-Ing, 57258 Freudenberg (DE)
(74) Vertreter: Gesthuysen, von Rohr & Eggert

(57) **Zusammenfassung**

Beschrieben und dargestellt ist eine Schraubendruckfeder (3) mit zwei Endwindungen (7) und jeweils einem sich an jede Endwindung (7) anschließenden Übergangsbereich als Achsfeder für Radaufhängungen von Kraftfahrzeugen, z.B. für Radaufhängungen mit einem einerseits mit der Karosserie (1) und andererseits mit dem Rad (2) verbundenen, eine Schraubendruckfeder (3) und einen Stoßdämpfer (4) ausweisenden, radführenden Federbein (5) und einem Querlenker (6).

Bei der erfindungsgemäßen Schraubendruckfeder (3) ist die Schwingfestigkeit und die Lebensdauer dadurch wesentlich erhöht, daß die Endwindungen (7) oder/und die Übergangsbereiche zusätzlich durch Festwalzen oder/und durch Festklopfen bearbeitet sind.

## Beschreibung

Die Erfindung betrifft eine Schraubendruckfeder mit zwei Endwindungen und jeweils einem sich an jede Endwindung anschließenden Übergangsbereich als Achsfeder für Radaufhängungen von Kraftfahrzeugen, zum Beispiel für Radaufhängungen mit einem einerseits mit der Karosserie und andererseits mit dem Rad verbundenen, eine Schraubendruckfeder (= Tragfeder) und einem Stoßdämpfer aufweisenden, radführenden Federbein und mit einem Querlenker.

Bei Kraftfahrzeugen werden Federn, und zwar Stahlfedern, umfangreich eingesetzt, nämlich im Bereich des Antriebs, des Fahrwerks sowie der Karosserie und der Funktionsbetätigungen. Vorliegend geht es um Federn im Bereich des Fahrwerks, und zwar um Schraubendruckfedern als Achsfedern für die zu den Fahrwerken gehörenden Radaufhängungen.

Zur Funktion und zur Bedeutung der Fahrwerke von Kraftfahrzeugen, insbesondere auch der Radaufhängungen und der dazu gehörenden Schraubendruckfedern als Achsfedern wird verwiesen u. a. auf "LUEGER LEXIKON DER TECHNIK" Band 12 "LEXIKON DER FAHRZEUGTECHNIK", 1997, Deutsche Verlags-Anstalt GmbH, Stuttgart, insbesondere Seite 198, rechte Spalte, Seite 203, rechte Spalte, unten, Seite 204, linke Spalte, auf "Fahrwerk-technik 1" von Dipl.-Ing. Jörnsen Reimpell, 1970, Vogel-Verlag, Würzburg, insbesondere auf die Seiten 78 bis 145, auf "BOSCH Kraftfahrtechnisches Taschenbuch", 25. Auflage, 2003, Friedr. Vieweg & Sohn Verlag / GWV Fachverlage GmbH, Wiesbaden, insbesondere auf die Seiten 754 bis 767, und ganz besonders auf "Federelemente aus Stahl für die Automobilindustrie" von Ludwig M. Leiseder, Die Bibliothek der Technik, Band 140, 1997, Verlag Moderne Industrie, Landsberg, insbesondere dort auf die Seiten 7 bis 20 und 46 bis 54. Der Offenbarungsgehalt dieser vorveröffentlichten Druckschriften wird als Fachwissen hiermit ausdrücklich zum Offenbarungsgehalt in Verbindung mit den in Rede stehenden Schraubendruckfedern gemacht.

Ein besonderes Problem bei Radaufhängungen mit einem einerseits mit der Karosserie und andererseits mit dem Rad verbundenen, eine Schraubendruckfeder (= Tragfeder) und einem Stoßdämpfer aufweisenden, radführenden Federbein und mit einem Querlenker, also bei McPherson-Federbeinen, ist das der Querkraftkompensation. Dazu ist eine bahnbrechende Entwicklung durchgeführt worden (vergleiche die deutsche Patentschrift 37 43 450 und die inhaltsgleiche europäische Patentschrift 0 319 651, die deutsche Patentschrift 101 25 503 und die Literaturstelle "Federelemente aus Stahl für die Automobilindustrie", Seiten 50 und 51, Abb. 34: McPherson-Federbein mit SL-Feder); es handelt sich dabei um eine Schraubendruckfeder, deren Federmittellinie im unbelasteten Zustand einen S-förmigen Verlauf hat und die im Arbeitsbereich wieder eine annähernd zylindrische Gestalt annimmt, Ihre querkraftkompensierende Wirkung resultiert daraus, daß sie eine schräg zur Federachse verlaufende Kraftwirkungslinie aufweist und dadurch bei nur mäßiger Schrägstellung der Schraubendruckfeder zur Dämpferachse für eine erhebliche Querkraftreduzierung an der Dämpferstange sorgt. Bei der ganz überwiegenden Zahl von Kraftfahrzeugen, die McPherson-Federbeine aufweisen, werden heute die zuvor beschriebenen, sogenannten SL-Federn eingesetzt.

Wie sich insbesondere aus der Literaturstelle "Federelemente aus Stahl für die Automobilindustrie" ergibt, insbesondere aus den Ausführungen auf den Seiten 7 bis 20 und 46 bis 54, müssen Schraubendruckfedern der hier in Rede stehenden Art besonders hohen Anforderungen genügen, insbesondere in bezug auf eine begrenzte Kriech- oder Relaxationsneigung und eine vorgeschriebene Schwingfestigkeit, und gibt es eine Vielzahl von Beeinflussungsparametem, um diesen Anforderungen zu genügen. Von erheblicher Bedeutung ist dabei auch das vorgegebene Ziel einer Gewichtsoptimierung. Schon seit etwa einem Jahrzehnt sind zuvor langjährig verwendete Drähte mit Zugfestigkeiten von 1650 MPa bis 1850 MPa durch hochfeste Drähte mit Zugfestigkeiten von 1900 MPa bis 2050 MPa abgelöst worden. Heute werden hochfeste Drähte mit Zugfestigkeiten von 2200 MPa und darüber hinaus verwendet.

Bei den bekannten Schraubendruckfedern der in Rede stehenden Art sind selbstverständlich eine Vielzahl von Beeinflussungsparametern berücksichtigt und Maßnahmen mit dem Ziel verwirklicht, den an diese Schraubendruckfedem gestellten Anforderungen zu genügen, insbesondere auch der vorgegebenen Schwingfestigkeit und damit der geforderten Lebensdauer, - für das Fahrwerk von Kraftfahrzeugen ja besonders wichtig. Zu diesen Beeinflussungsparametern und Maßnahmen - u. a. Zugfestigkeit, Streckgrenze, Härte und Duktilität, Verlauf der Eigenspannungen, Werkstoffgefüge, Reinheitsgrad, Oberflächengüte, Verwendung von patentiertem gezogenem Draht, von ölschlußvergütetem Draht, Draht aus hartgezogenen Kohlenstoffstählen oder aus hochlegierten Stählen, Vergüten, Aushärten, Kaltverfestigen, Kugelstrahlen, Oberflächenschutz durch Pulverbeschichtung oder Tauchlackierung und Vorsätzen - wird nochmals auf die Literaturstelle "Federelemente aus Stahl für die Automobilindustrie", Seiten 7 bis 20 und 46 bis 54, verwiesen.

Auf dem Weg zur Erfindung ist erkannt worden, daß trotz der Vielzahl von berücksichtigten Beeinflussungsparametern und der Vielzahl von mit dem Ziel, den an die in Rede stehenden Schraubendruckfedern gestellten Anforderungen zu genügen, verwirklichten Maßnahmen in Einzelfällen die vorgegebene Schwingfestigkeit und damit die geforderte Lebensdauer nicht erreicht wird, daß nämlich im Bereich der Endwindungen, mit denen die Schraubendruckfedern üblicherweise zwischen Federtellern eingespannt werden, und/-oder in den Übergangsbereichen Brüche auftreten. Folglich liegt der Erfindung die Aufgabe zugrunde, die bekannte Schraubendruckfeder, von der die Erfindung ausgeht, hinsichtlich der Schwingfestigkeit und damit der Lebensdauer nochmals zu verbessern.

Die erfindungsgemäße Schraubendruckfeder, die sich durch eine nochmals verbesserte Schwingfestigkeit und damit durch eine nochmals erhöhte Lebensdauer gegenüber den bekannten Schraubendruckfedern auszeichnet, ist zunächst und im wesentlichen dadurch gekennzeichnet, daß die Endwindungen oder/und die Übergangsbereiche zusätzlich durch Festwalzen oder/und durch Festklopfen bearbeitet sind. Nachfolgend wird Festwalzen sowohl im engeren Sinn als auch im weiteren Sinn verstanden; auch das Festklopfen soll nachfolgend als Festwalzen verstanden werden.

Festwalzen ist ein Bearbeitungsverfahren (vergleiche "LUEGER LEXIKON DER TECHNIK", Band 8, "LEXIKON DER FERTIGUNGSTECHNIK UND ARBEITSMASCHINEN", 1997, Deutsche Verlags-Anstalt GmbH, Stuttgart, Seite 246, rechte Spalte), durch das die Festigkeit des Werkstoffes in den Außenschichten erhöht werden kann. Außer der Verfestigung des Werkstoffes um etwa 30 % der Ausgangsfestigkeit entstehen Druckvorspannungssysteme, die die Dauerfestigkeit, nämlich die Biegewechselfestigkeit und, vorliegend von Bedeutung, die Schwingfestigkeit stark heraufsetzen. (Zum Festwalzen wird auch verwiesen auf die Literaturstelle "Mechanische Oberflächenbehandlung", herausgegeben von Erhard Broszeit, 1989, Verlag DGM-Informationsgesellschaft, Oberursel.)

Zuvor ist bereits ausgeführt worden, daß auf dem Weg zur Erfindung erkannt worden ist, daß bei den zum Stand der Technik gehörenden Schraubendruckfedern in Einzelfällen die vorgegebene Schwingfestigkeit und damit die geforderte Lebensdauer nicht erreicht wird, daß nämlich im Bereich der Endwindungen, mit denen die Schraubendruckfedern üblicherweise zwischen Federtellern eingespannt werden, Brüche auftreten. Folglich geht eine die allgemeine Lehre der Erfindung konkretisierende Lehre dahin, bei einer Schraubendruckfeder als Achsfeder für eine Radaufhängung, zu der mindestens ein Federteller gehört, in der Regel zwei Federteller gehören, die Endwindungen im Abwälzbereich mit dem Federteller bzw. die Endwindungen in den Abwälzbereichen mit den Federtellern durch Festwalzen zu bearbeiten. Es gibt bzw. denkbar sind durchaus Radaufhängungen, zu denen nur ein Federteller gehört. In der Regel gehören zu den in Rede stehenden Radaufhängungen jedoch zwei Federteller. Folglich wird nachfolgend immer davon ausgegangen, daß die erfindungsgemäße Schraubendruckfeder als Achsfeder für eine Radaufhängung bestimmt ist, zu der zwei Federteller gehören.

Die Anlage der Endwindungen einer Schraubendruckfeder an den Federtellern der Radaufhängung ist nicht statisch; mit statisch ist gemeint, daß zwischen den Anlagepunkten, den Anlagelinien oder den Anlageflächen der Endwindungen der Schraubendruckfeder und den Federtellern Relativbewegungen nicht stattfinden. Tatsächlich sind aber die Anlagen der Anlagepunkte, der Anlagelinien oder der Anlageflächen der Endwindungen der Schraubendruckfeder an den Federtellern dynamisch; mit dynamisch ist hier gemeint, daß zwischen den Anlagen der Anlagepunkte, der Anlagelinien oder der Anlageflächen der Endwindungen der Schraubendruckfeder an den Tellerfedern Relativbewegungen auftreten. Die Anlage der Anlagepunkte, der Anlagelinien oder der Anlageflächen der Endwindungen der Schraubendruckfeder "wandem" also bezüglich der Anlagepunkte, der Anlagelinien oder der Anlageflächen der Federteller. Das gilt insbesondere, aber nicht nur, bei den weiter oben beschriebenen sogenannten SL-Federn. Daraus resultiert, daß es sowohl an den Endwindungen der Schraubendruckfeder als auch an den Federtellern Abwälzbereiche gibt. Für die zuvor konkretisierte erfindungsgemäße Lehre geht es um die Abwälzbereiche der Anlagepunkte, der Anlagelinien oder der Anlageflächen der Endwindungen der Schraubendruckfeder.

Unter Berücksichtigung dessen, was zuvor ausgeführt worden ist, könnte es theoretisch ausreichend sein, die Endwindungen der Schraubendruckfeder nur in den erläuterten Abwälzbereichen mit den Federtellern durch Festwalzen zu bearbeiten. Das ist jedoch nicht zweckmäßig. Einerseits läßt sich der in Rede stehende Abwälzbereich nicht genau festlegen; auch der Abwälzbereich kann "wandern", zum Beispiel abhängig vom konkreten Einbau der Radaufhängung in das Kraftfahrzeug bzw. vom konkreten Einbau der Schraubendruckfeder in die Radaufhängung. Andererseits empfiehlt es sich - schon aus Sicherheitsgründen - die Endwindungen der Schraubendruckfeder auch in an die Abwälzbereiche mit den Federtellern angrenzenden Bereichen durch Festwalzen zu bearbeiten, vorzugsweise in allen an die Abwälzbereiche mit den Federtellern angrenzenden Bereichen durch Festwalzen zu bearbeiten. Die Größe der an die Abwälzbereiche der Endwindungen angrenzenden Bereiche, die auch durch Festwalzen bearbeitet werden, wird der Fachmann empirisch festlegen. Als Anregung kann dazu die Vorgabe dienen, daß die an die Abwälzbereiche der Endwindungen angrenzenden Bereiche, die auch durch Festwalzen bearbeitet sind, jeweils eine vom theoretischen Mittelpunkt der Abwälzbereiche aus gesehen etwa 0,2- bis 2-fache radiale Ausdehnung wie die Abwälzbereiche haben, vorzugsweise eine 0,5- bis 1-fache Ausdehnung, insbesondere eine etwa gleiche Ausdehnung.

Zuvor ist dargelegt worden, daß die Endwindungen der Schraubendruckfeder im Abwälzbereich mit dem Federteller bzw. die Endwindungen in den Abwälzbereichen mit den Federtellern durch Festwalzen bearbeitet ist bzw sind. Es kann sich jedoch empfehlen, die Schraubendruckfedern im gesamten Bereich der Endwindungen und vorzugsweise auch der Übergangsbereiche durch Festwalzen zu bearbeiten, also nicht nur im Abwälzbereich mit dem Federteller bzw, in den Abwälzbereichen mit den Federtellern. Das erfindungsgemäße Festwalzen der Endwindungen und vorzugsweise auch der Übergangsbereiche der Schraubendruckfedern führt zu optimalen Druckeigenspannungen in den durch Festwalzen bearbeiteten Bereichen.

Gegenstand der Erfindung ist auch eine Radaufhängung, insbesondere eine Radaufhängung mit einem einerseits mit der Karosserie und andererseits mit dem Rad verbundenen, eine Schraubendruckfeder (= Tragfeder) und einen Stoßdämpfer aufweisenden, radführenden Federbein und mit einem Querlenker, also ein McPherson-Federbein, mit einer erfindungsgemäßen Schraubendruckfeder.

Gegenstand der Erfindung ist schließlich auch ein Arbeitsverfahren zur Bearbeitung der Endwindungen einer Schraubendruckfeder als Achsfeder für Radaufhängungen von Kraftfahrzeugen, insbesondere für Radaufhängungen mit einem einerseits mit der Karosserie und andererseits mit dem Rad verbundenen, eine Schraubendruckfeder (= Tragfeder) und einen Stoßdämpfer aufweisenden, radführenden Federbein und mit einem Querlenker (McPherson-Federbein), das dadurch gekennzeichnet ist, daß die Endwindungen oder/und die Übergangsbereiche der Schraubendruckfeder zusätzlich durch Festwalzen oder/und durch Festklopfen bearbeitet werden. Dazu, wo das zusätzliche Bearbeiten durch Festwalzen oder/und durch Festklopfen erfolgt, wird auf die zuvor in Verbindung mit der erfindungsgemäßen Schraubendruckfeder gemachten Ausführungen verwiesen.

Bei dem erfindungsgemäßen Arbeitsverfahren kann so gearbeitet werden, wie das im Stand der Technik beim Festwalzen bekannt ist. Unter Berücksichtigung der besonderen Geometrie der zu bearbeitenden Bereiche empfiehlt sich ein mäanderförmiges Abfahren dieser Bereiche mit kleinem Bahnversatz, also überaneinandergrenzende, vorzugsweise sich überlappende Bahnen. Im übrigen können die zu bearbeitenden Bereiche auch mit einem rotierenden, exzentrischen Festwalzwerkzeug abgefahren werden. Die zu bearbeitenden Bereiche können schließlich auch durch ein um die entsprechenden Bereiche, also um die Endwindungen und vorzugsweise auch um die Übergangsbereiche der Schraubendruckfedern rotierendes Festwalzwerkzeug bearbeitet werden.

Versuche haben gezeigt, daß die Anwendung der Erfindung unter korrosiven Bedingungen zu einer erheblichen Erhöhung der Lebensdauer der in Rede stehenden Schraubendruckfedern führt, nämlich zu einer um den Faktor 2,2 bis 2,8 erhöhten Lebensdauer.

Im einzelnen gibt es eine Mehrzahl von Möglichkeiten, die Lehre der Erfindung auszugestalten und weiterzubilden. Dazu wird verwiesen insbesondere auf die dem Patentanspruch 1 nachgeordneten Patentansprüche 2 bis 5 und auf die dem Patentanspruch 7 nachgeordneten Patentansprüche 8 und 9 sowie auf die nachfolgende Erläuterung in Verbindung mit der Zeichnung. In der Zeichnung zeigen
- Fig. 1: eine besondere Ausführungsform einer Radaufhängung von Kraftfahrzeugen mit einer erfindungsgemäßen Schraubendruckfeder,
- Fig. 2: in gegenüber der Fig. 1 wesentlich vergrößertem Maßstab eine Draufsicht auf einen Teil der oberen Endwindung der bei der Radaufhängung nach Fig. 1 verwendeten Schraubendruckfeder,
- Fig. 3: eine erste Art des erfindungsgemäß anzuwendenden Festwalzens,
- Fig. 4: eine zweite Art des erfindungsgemäß anzuwendenden Festwalzens und
- Fig. 5: eine dritte Art des erfindungsgemäß anzuwendenden Festwalzens.

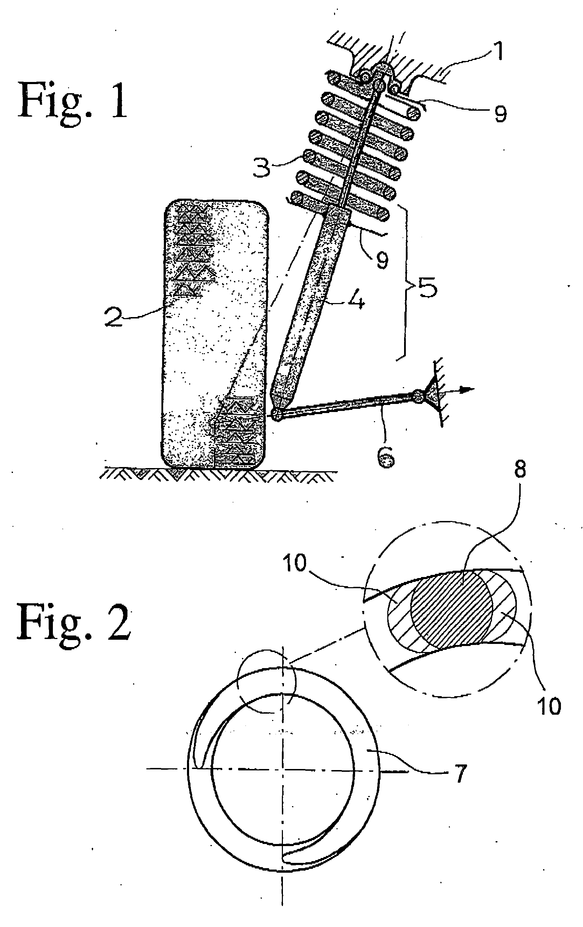

Die Fig. 1, die der Fig. 1 der deutschen Patentschrift 37 43 450 und der inhaltsgleichen europäischen Patentschrift 0 319 651 entspricht, zeigt eine besondere Radaufhängung eines Kraftfahrzeuges, nämlich eine Radaufhängung mit einem einerseits mit der Karosserie 1 und andererseits mit dem Rad 2 verbundenen, eine Schraubendruckfeder 3 = Tragfeder und einem Stoßdämpfer 4 aufweisenden, radführenden Federbein 5 und mit einem Querlenker 6; es handelt sich um ein sogenanntes McPherson-Federbein.

In der Fig. 2 ist die Lehre der Erfindung angedeutet. Sie besteht nämlich zunächst und im wesentlichen darin, daß die Endwindungen 7 der Schraubendruckfeder 3 zusätzlich, das heißt zusätzlich zu im Stand der Technik bekannten Maßnahmen, durch Festwalzen bearbeitet sind. Der vergrößerte Ausschnitt aus der Fig. 2 zeigt, daß die Entwindung 7 der Schraubendruckfeder 3 im - feinschraffiert dargestellten - Abwälzbereich 8 durch Festwalzen bearbeitet ist. Der Abwälzbereich 8 der Endwindung 7 der Schraubendruckfeder 3 ist der weiter oben erläuterte Bereich der Endwindung 7 der Schraubendruckfeder 3, der mit dem in Fig. 1 dargestellten Federteller 9 - punktförmig, linienförmig oder flächenförmig - zur Anlage kommt. Vorzugsweise - und das ist in dem vergrößerten Ausschnitt aus der Fig. 2 dargestellt - sind die Endwindungen 7 der Schraubendruckfeder 3 auch in den an die Abwälzbereiche 8 angrenzenden - grobschraffiert dargestellten - Bereichen 10 durch Festwalzen bearbeitet, und zwar in allen an die Abwälzbereiche 8 angrenzenden Bereichen 10.

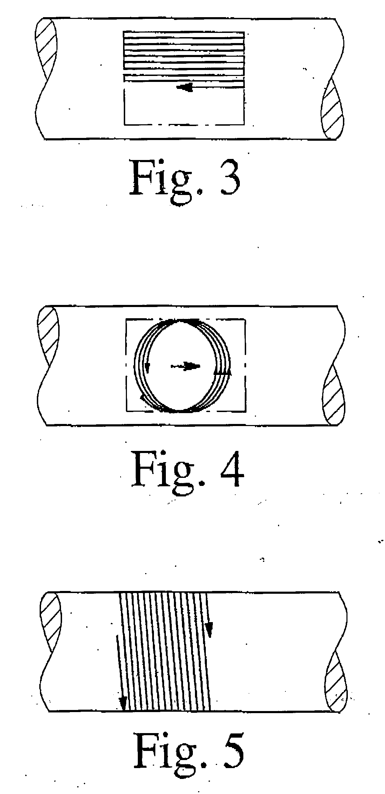

Die Fig. 3 zeigt eine erste Art des erfindungsgemäß anzuwendenden Festwalzens. Dabei wird der zu bearbeitende Bereich mit einem Festwalzwerkzeug mäanderformig abgefahren, und zwar mit einem relativ kleinen Bahnversatz, so daß sich dann übereinandergrenzende, vorzugsweise sich überlappende Bahnen ergeben.

Bei dem in der Fig. 4 dargestellten Ausführungsbeispiel werden die zu bearbeitenden Bereiche mit einem rotierenden, exzentrischen Festwalzwerkzeug abgefahren. Auch hier empfiehlt es sich, so vorzugehen, daß sich überlappende Bereiche ergeben.

Die in Fig. 5 dargestellte Art des Festwalzens eignet sich insbesondere dann, wenn die Endwindungen und vorzugsweise auch die Übergangsbereiche insgesamt durch Festwalzen bearbeitet werden, also nicht nur im Abwälzbereich mit dem Federteller bzw. in den Abwälzbereichen mit den Federtellern. Diese Art des Festwalzens besteht darin, daß durch ein um den entsprechenden Bereich bzw um die entsprechende Bereiche rotierendes Festwalzwerkzeug die gesamte Mantelfläche der Endwindungen bzw. der Endwindungen und der angrenzenden Übergangsbereiche bearbeitet wird.

## Patentansprüche

1. Schraubendruckfeder mit zwei Endwindungen und jeweils einem sich an jede Endwindung anschließenden Übergangsbereich als Achsfeder für Radaufhängungen von Kraftfahrzeugen, zum Beispiel für Radaufhängungen mit einem einerseits mit der Karosserie und andererseits mit dem Rad verbundenen, eine Schraubendruckfeder (= Tragfeder) und einem Stoßdämpfer aufweisenden, radführenden Federbein und mit einem Querlenker,
**dadurch gekennzeichnet,**
**daß** die Endwindungen (7) oder/und die Übergangsbereiche zusätzlich durch Festwalzen oder/und durch Festklopfen bearbeitet sind.

2. Schraubendruckfeder nach Anspruch 1 als Achsfeder für eine Radaufhängung, zu der mindestens ein Federteller gehört, in der Regel zwei Federtellern gehören, **dadurch gekennzeichnet, daß** die Endwindungen (7) im Abwälzbereich (8) mit dem Federteller (9) bzw. die Endwindungen (7) in den Abwälzbereichen (8) mit den Federtellern (9) durch Festwalzen bearbeitet ist bzw. sind.

3. Schraubendruckfeder nach Anspruch 2, **dadurch gekennzeichnet, daß** die Endwindungen (7) auch in an die Abwälzbereiche (8) mit den Federtellern (9) angrenzenden Bereichen (10) durch Festwalzen bearbeitet sind.

4. Schraubendruckfeder nach Anspruch 3, **dadurch gekennzeichnet, daß** die Endwindungen (7) in allen an die Abwälzbereiche (8) mit den Federtellern (9) angrenzenden Bereichen (10) durch Festwalzen bearbeitet sind.

5. Schraubendruckfeder nach Anspruch 3 oder 4, **dadurch gekennzeichnet, daß** die an die Abwäzbereiche (8) der Endwindungen (3) angrenzenden Bereiche (10), die auch durch Festwalzen bearbeitet sind, jeweils eine vom theoretischen Mittelpunkt der Abwälzbereiche (8) aus gesehen etwa 0,2- bis 2-fache radiale Ausdehnung wie die Abwälzbereiche (8) haben, vorzugsweise eine 0,5- bis 1-fache Ausdehnung, insbesondere eine etwa gleiche Ausdehnung.

6. Schraubendruckfeder nach Anspruch 1, **dadurch gekennzeichnet, daß** die Endwindungen (3) oder/und die Übergangsbereiche über die gesamte Mantelfläche durch Festwalzens bearbeitet sind.

7. Radaufhängung eines Kraftfahrzeugs, insbesondere mit einem einerseits mit der Karosserie und andererseits mit dem Rad verbundenen, eine Schraubendruckfeder (= Tragfeder) und einen Stoßdämpfer aufweisenden, radführenden Federbein und mit einem Querlenker (McPherson-Federbein) **gekennzeichnet durch** eine Schraubendruckfeder nach einem der Ansprüche 1 bis 6.

8. Arbeitsverfahren zur Bearbeitung der Endwindungen einer Schraubendruckfeder als Achsfeder für Radaufhängungen von Kraftfahrzeugen, insbesondere für Radaufhängungen mit einem einerseits mit der Karosserie und andererseits mit dem Rad verbundenen, eine Schraubendruckfeder (= Tragfeder) und einen Stoßdämpfer aufweisenden, radführenden Federbein und mit einem Querlenker (McPherson-Federbein) **dadurch gekennzeichnet, daß** die Endwindungen oder/-und die Übergangsbereiche der Schraubendruckfeder zusätzlich durch Festwalzen oder/und durch Festklopfen bearbeitet sind.

9. Arbeitsverfahren nach Anspruch 8, **dadurch gekennzeichnet, daß** die zu bearbeitenden Bereiche durch mäanderförmiges Abfahren dieser Bereiche mit einem Festwalzwerkzeug, vorzugsweise mit kleinem Bahnversatz, festgewalzt werden.

10. Arbeitsverfahren nach Anspruch 8, **dadurch gekennzeichnet, daß** die zu bearbeitenden Bereiche durch Abfahren dieser Bereiche mit einem rotierenden, exzentrischen Festwalzwerkzeug, vorzugsweise überlappend, festgewalzt werden.

11. Arbeitsverfahren nach Anspruch 8, **dadurch gekennzeichnet, daß** die gesamte Mantelfläche der zu bearbeitenden Bereiche durch ein um diese Bereiche rotierendes Festwalzwerkzeug festgewalzt werden.
